# EUROPEAN PATENT APPLICATION

(11) **EP 4 640 428 A1**
(43) Date of publication of application: **29.10.2025**
(21) Application number: 24741333.9
(22) Date of filing: 11.01.2024
(51) Int. Cl.: B32B 17/10

(54) **FUNCTIONAL ELEMENT WITH REGIONALLY ELECTRICALLY CONTROLLABLE OPTICAL PERFORMANCE, AND COMPOUND GLASS**

(30) Priority: 13.01.2023 CN 202310067709; 13.01.2023 CN 202320117169 U
(71) Applicant: Fuyao Glass Industry Group Co., Ltd., Fuqing, Fujian 350300 (CN)
(72) Inventor: LIN, Shou, Fujian 350300 (CN); SHUI, Fang, Fujian 350300 (CN)
(74) Representative: Patentanwälte Olbricht Buchhold Keulertz
(86) International application number: PCT/CN2024/071875
(87) International publication number: WO 2024/149337

(57) **Abstract**

The present disclosure provides a functional element with regionally electrically controllable optical performance and a laminated glass. The functional element with regionally electrically controllable optical performance includes: at least one first transparent substrate (1) and at least one second transparent substrate (2); a first planar electrode (3) and a second planar electrode (4), both disposed between the first transparent substrate (1) and the second transparent substrate (2), and each provided with at least one busbar (5); and a dimming functional layer disposed between the first planar electrode (3) and the second planar electrode (4), wherein the functional element is provided with a plurality of cutting surfaces (7,8,9,10), so as to expose the busbar (5) on the first planar electrode (3) and the busbar (5) on the second planar electrode (4). The functional element with regionally electrically controllable optical performance provided in the present disclosure can greatly reduce the manufacturing complexity of partitioned electrically controllable optical functional elements and reduce the voltage drop among different partitioned functional regions, so as to ensure the consistency of optical properties of independent functional regions.

## Description

### RELATED APPLICATIONS

The present disclosure claims priority of Chinese Patent Application No. 202310067709.2, filed on January 13, 2023, and Chinese Patent Application No. 202320117169.X, filed on January 13, 2023, and both of which are hereby incorporated by reference in their entireties.

### TECHNICAL FIELD

The present disclosure relates to the technical field of special (optical and electrical) glass products, and in particular to a functional element with regionally electrically controllable optical performance and a laminated glass.

### BACKGROUND

Referring to FIG. 1, the patent with publication number CN114072281A discloses a functional element with regionally electrically controllable optical performance, in which a layout of a synchronous cutting line 16 and busbars 18 and 19 can realize individual control of different regions.

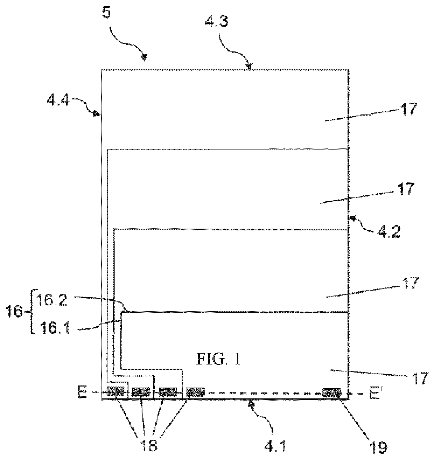

In the prior art, an approximate direction of the synchronous cutting line is parallel or substantially parallel to a direction of the busbar, such that a narrow-area region exists between the busbar and the individual control region, such as an intermediate region of different cutting lines in FIG. 1. A resistance of this intermediate region may be much greater than that of a partitioned functional region, and the farther away from the busbar, the greater the resistance of the intermediate region in the partitioned functional region, which results in a significant voltage drop under a same voltage. To ensure consistent optical properties in different partitioned functional regions, a resistance of a planar electrode needs to be decreased (which may increase the cost) or a voltage of the planar electrode needs to be increased (which may increase the risk of use). In addition, during the partitioning process implemented through the aforementioned cutting line method, a path of the cutting line is formed of at least one vertical part and horizontal part, thus the complexity of manufacturing is increased.

### SUMMARY

In view of the problem in the prior art, the functional element with regionally electrically controllable optical performance provided in the present disclosure greatly simplifies the manufacturing complexity of partitioned electrically controllable optical functional elements, reduces the voltage drop among different partitioned functional regions, and ensures the consistency of optical properties of independent functional regions.

In order to solve the technical problem, the present disclosure provides a technical solution:
the present disclosure provides a functional element with regionally electrically controllable optical performance, including:
at least one first transparent substrate and at least one second transparent substrate;
a first planar electrode and a second planar electrode, both disposed between the first transparent substrate and the second transparent substrate, and each provided with at least one busbar; and
a dimming functional layer disposed between the first planar electrode and the second planar electrode;
wherein the functional element is provided with a plurality of cutting surfaces, so as to expose the busbar on the first planar electrode and the busbar on the second planar electrode; and
the second planar electrode has a partition cutting line, which cuts the second planar electrode into independent sections along a direction perpendicular to the busbar on the second planar electrode and the number of the independent sections corresponds to a number of the busbar on the second planar electrode.

In some embodiments of the present disclosure, at least a portion of the busbar on the second planar electrode, and the busbar on the first planar electrode are disposed on the same side of the functional element.

In some embodiments of the present disclosure, the busbar on the first planar electrode is polyline-shaped and is disposed on both: one side of the busbar on the second planar electrode, and a side adjacent to the side.

In some embodiments of the present disclosure, a cross-sectional area of the functional element is not less than 0.5 m², and a length of the busbar on the first planar electrode is not less than 300 mm and not greater than half of a cross-sectional perimeter of the functional element.

In some embodiments of the present disclosure, the busbar on the second planar electrode and the busbar on the first planar electrode are disposed on a same side of the functional element.

In some embodiments of the present disclosure, the cross-sectional area of the functional element is less than 0.5 m², and the length of the busbar on the first planar electrode is not less than 100 mm.

In some embodiments of the present disclosure, the busbar on the first planar electrode is disposed on a side adjacent to one side of the busbar on the second planar electrode in the functional element.

In some embodiments of the present disclosure, the cross-sectional area of the functional element is not less than 0.5 m², and the length of the busbar on the first planar electrode is not less than 300 mm and not greater than half of a maximum cross-sectional perimeter of the functional element.

In some embodiments of the present disclosure, the plurality of cutting surfaces include: a first cutting surface, a second cutting surface, a third cutting surface and a fourth cutting surface, wherein
the first cutting surface cuts the first transparent substrate, the first planar electrode and the dimming functional layer along a direction perpendicular to the busbar on the second planar electrode;
the second cutting surface cuts the first transparent substrate, the first planar electrode and the dimming functional layer along a direction parallel to the busbar on the second planar electrode;
the third cutting surface cuts the second transparent substrate, the second planar electrode and the dimming functional layer along a direction perpendicular to the busbar on the first planar electrode; and
the fourth cutting surface cuts the second transparent substrate, the second planar electrode and the dimming functional layer along a direction parallel to the busbar on the second planar electrode.

In some embodiments of the present disclosure, the plurality of cutting surfaces further include: a fifth cutting surface, which cuts the second transparent substrate, the second planar electrode and the dimming functional layer along a direction perpendicular to the busbar on the first planar electrode, and the fifth cutting surface intersects with the fourth cutting surface.

In some embodiments of the present disclosure, a length ratio of a short busbar to a long busbar is not less than 0.5, among the busbar on the second planar electrode and the busbar on the first planar electrode.

In some embodiments of the present disclosure, a minimum spacing between the busbar on the first planar electrode and the busbar on the second planar electrode on a horizontal projection plane is not less than 5 mm.

In some embodiments of the present disclosure, the functional element with regionally electrically controllable optical performance further includes:
a conductor having lead-out bodies respectively corresponding to the busbar on the first planar electrode and the busbar on the second planar electrode.

In some embodiments of the present disclosure, the number of lead-out bodies is not less than a sum of the number of busbar on the first planar electrode and the number of busbar on the second planar electrode.

In some embodiments of the present disclosure, the dimming functional layer includes: any one or more combinations of a PDLC (Polymer Dispersed Liquid Crystal) dimming film, an EC (Electrochromic) dimming film, an SPD (Suspended Particle Device) dimming film and a LV (Light Valve) dimming film.

In a second aspect, the present disclosure also provides a laminated glass, including the functional element with regionally electrically controllable optical performance as mentioned above, configured to be mounted on at least one of a sunroof, a side window, a windscreen and a rear window of a vehicle, and as an interior glass or an exterior glass in a building for sun shading or privacy protection.

As can be seen from the above description, the embodiments of the present disclosure provide a functional element with regionally electrically controllable optical performance and a laminated glass. The functional element with regionally electrically controllable optical performance includes: at least one first transparent substrate and at least one second transparent substrate; a first planar electrode and a second planar electrode,both disposed between the first transparent substrate and the second transparent substrate and each provided with at least one busbar; and a dimming functional layer disposed between the first planar electrode and the second planar electrode; in which the functional element is provided with a plurality of cutting surfaces, so as to expose the busbar on the first planar electrode and the busbar on the second planar electrode; and the second planar electrode has a partition cutting line, which cuts the second planar electrode into independent sections along a direction perpendicular to the busbar on the second planar electrode, and the number of the independent sections corresponds to the number of the busbar on the second planar electrode.

The functional element with regionally electrically controllable optical performance provided in the present disclosure greatly simplifies the manufacturing complexity of partitioned electrically controllable optical functional elements, reduces the voltage drop among different partitioned functional regions, and ensures the consistency of optical properties of independent functional regions.

### BRIEF DESCRIPTION OF THE DRAWINGS

In order to more clearly illustrate the technical solutions in the embodiments of the present disclosure or the prior art, the drawings that need to be used in the description of the embodiments or the prior art are briefly introduced below. Obviously, the drawings in the description below are only some embodiments documented in the present disclosure. A person skilled in the art can also obtain other drawings based on these drawings without any creative effort.
FIG. 1 is a schematic structural diagram of a functional element with regionally electrically controllable optical performance in the prior art;
FIG. 2 is a schematic structural diagram of a functional element with regionally electrically controllable optical performance in an embodiment of the present disclosure;
FIG. 3 is a top view schematic of the functional element with regionally electrically controllable optical performance in FIG. 2;
FIG. 4 is another schematic structural diagram of a functional element with regionally electrically controllable optical performance in an embodiment of the present disclosure;
FIG. 5 is a side view schematic of the functional element with regionally electrically controllable optical performance in FIG. 3;
FIG. 6 is a schematic location diagram of a conductor in an embodiment of the present disclosure;
FIG. 7 is another structural diagram of a functional element with regionally electrically controllable optical performance in an embodiment of the present disclosure;
FIG. 8 is a top view schematic of the functional element with regionally electrically controllable optical performance in FIG. 7;
FIG. 9 is a side view schematic of the functional element with regionally electrically controllable optical performance in FIG. 8;
FIG. 10 is a top view schematic of the functional element with regionally electrically controllable optical performance in FIG. 4;
FIG. 11 is a side view illustrating the functional element with regionally electrically controllable optical performance in FIG. 10;
FIG. 12 is another side view (opposite to a side view direction of FIG. 11) schematic of the functional element with regionally electrically controllable optical performance in FIG. 10.
FIG. 13 is a structural diagram of a conductor in an embodiment of the present disclosure; and
FIG. 14 is an enlarged schematic diagram of the circle position in FIG. 6.

### DESCRIPTION OF EMBODIMENTS

In order to more clearly describe the objective, technical solutions and advantages in the embodiments of the present disclosure, the drawings to be used in the description of the embodiments are introduced in further detail below. The schematic embodiments and descriptions of the present disclosure are used herein to explain the present disclosure, but are not intended to be limitations of the present disclosure. Obviously, the described embodiments are merely part of the embodiments, not all of the embodiments of the present disclosure. Based on the embodiments of the present disclosure, all other embodiments obtained by persons skilled in the art without making creative efforts shall fall within the protection scope of the present disclosure.

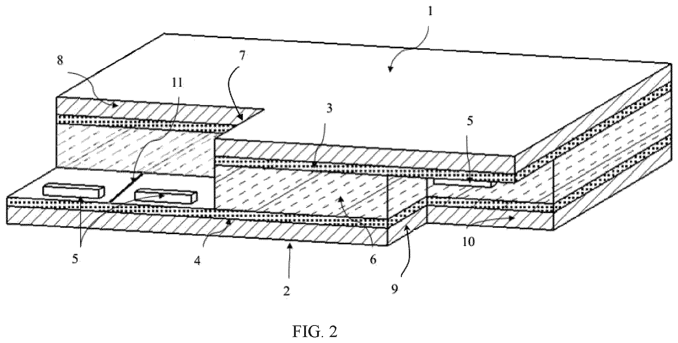

Referring to FIG. 2, first of all, an embodiment of the present disclosure provides a functional element with regionally electrically controllable optical performance, including:
at least one first transparent substrate 1 and at least one second transparent substrate 2;
a first planar electrode 3 and a second planar electrode 4, both disposed between the first transparent substrate 1 and the second transparent substrate 2, and each provided with at least one busbar 5; and
a dimming functional layer 6 disposed between the first planar electrode 3 and the second planar electrode 4;
in which the functional element is provided with a plurality of cutting surfaces (7, 8, 9, 10), so as to expose the busbar 5 on the first planar electrode 3 and the busbar 5 on the second planar electrode 4; and
the second planar electrode 4 has a partition cutting line 11, which cuts the second planar electrode 4 into independent sections along a direction perpendicular to the busbar 5 on the second planar electrode 4, and the number of the independent sections corresponds to a number of the busbar 5 on the second planar electrode 4 (i.e., each independent section cut by the partition cutting line 11 corresponds to one busbar 5).

As compared with the functional element with electrically controllable optical performance in the prior art, the functional element with regionally electrically controllable optical performance provided in the embodiments of the present disclosure achieves individual regional control by setting cutting lines and busbars, greatly simplifies the manufacturing complexity of partitioned electrically controllable optical functional elements, reduces the voltage drop among different partitioned functional regions, and ensures the consistency of optical properties of independent functional regions.

Referring to FIG. 2, in some embodiments of the present disclosure, at least a portion of the busbar 5 on the second planar electrode 4, and the busbar 5 on the first planar electrode 3 are disposed on the same side of the functional element. That is, the configuration includes both: the busbar 5 on the first planar electrode 3 is polyline-shaped (the polyline shape is disposed on both: one side of the busbar 5 on the second planar electrode 4, and a side adjacent thereto, though this polyline embodiment being not shown in FIG. 2); and the busbar 5 on the first planar electrode 3 is linear-segment (disposed only on one side of the busbar 5 on the second planar electrode 4).

All or part of the busbar 5 on the first planar electrode 3, and the busbar 5 on the second planar electrode 4 are disposed on one side of the functional element with regionally electrically controllable optical performance, of which a primary objective is to facilitate the subsequent design and manufacture of flat conductors in terms of costs and difficulties of combined machining.

With continued reference to FIG. 2, in some embodiments of the present disclosure, the busbar 5 on the first planar electrode 3 is isolated from the busbar 5 on the second planar electrode 4 by the dimming functional layer 6.

The busbars 5 of the first planar electrode 3 and the second planar electrode 4 are not directly adjacent to each other, and are isolated by the dimming functional layer 6. Since the busbars 5 of the first planar electrode 3 and the second planar electrode 4 are on different planar electrode surfaces, the busbars 5 need to be machined separately from different transparent substrates during machining, in order to form corresponding substrate cutting surfaces. If the spacing is too close, cutting of the transparent substrates may result in: insufficient inter-electrode distance leading to short-circuiting, or high voltage breakdown, or interference with each other during machining, and damage on the respective busbars.

In some embodiments of the present disclosure, the busbar 5 on the first planar electrode 3 is in a shape of folded line (the folded line is disposed on one side of the busbar 5 on the second planar electrode 4 and on a side adjacent to the side), and is disposed on one side of the busbar 5 on the second planar electrode 4 and on a side adjacent to the side.

In some embodiments of the present disclosure, when the busbar 5 on the first planar electrode 3 is in a shape of folded line and is disposed on one side of the busbar 5 on the second planar electrode 4, and on a side adjacent to the side, a cross-sectional area of the functional element is not less than 0.5 m², and a length of the busbar 5 on the first planar electrode 3 is not less than 300 mm and not greater than half of a cross-sectional perimeter of the functional element.

In some embodiments of the present disclosure, the busbar 5 on the first planar electrode 3 is disposed on one side of the busbar 5 on the second planar electrode 4 in the functional element with regionally electrically controllable optical performance, and on a side adjacent to the side of the busbar 5 on the second planar electrode 4 in the functional element with regionally electrically controllable optical performance; and the cross-sectional area of the functional element with regionally electrically controllable optical performance is not less than 0.5 m², and the length of the busbar 5 on the first planar electrode 3 is not less than 300 mm and not greater than half of a maximum cross-sectional perimeter of the functional element with regionally electrically controllable optical performance.

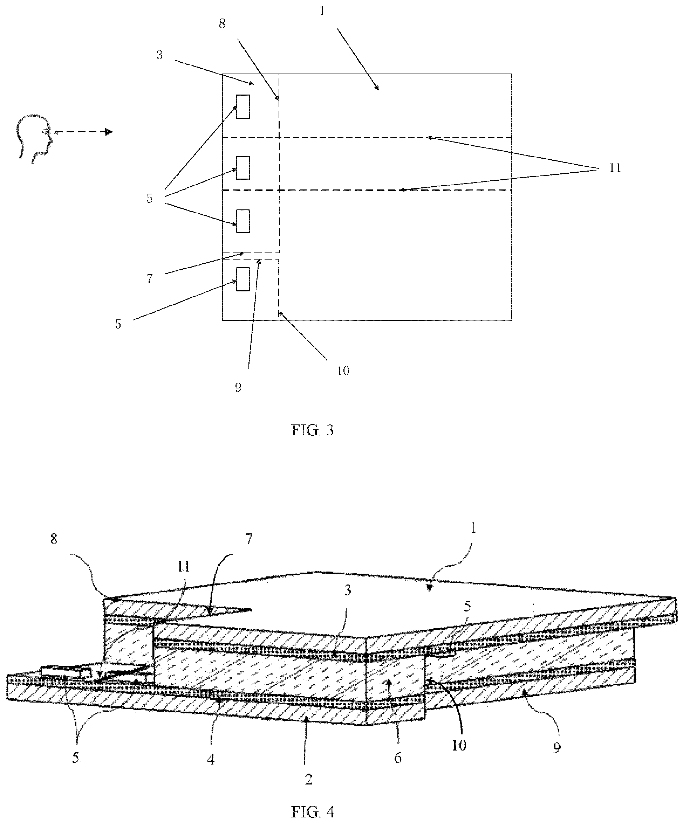

The busbar 5 on the first planar electrode 3 provided in this embodiment is polyline-shaped, of which one side is disposed on the same side as the busbar 5 on the second planar electrode 4, and the other side is disposed on a side adjacent to the same side (one side corresponding to a lower side in FIG. 3). This embodiment has advantageous effects: the functional element with regionally electrically controllable optical performance has a large area, and a large voltage drop at a distal end of the respective functional element. If the electrode is too short, an inconsistent optical state may occur on the front side. If the electrode is too long, manufacturing and cost disadvantages may be brought about. Therefore, a reasonable selection of busbar length is crucial for the performance of the functional element.

In addition, referring to FIG. 3, the cross-sectional area here refers to a largest cross-sectional area of the three cross-sectional areas that can be obtained along three sides (length, width and height) of the functional element with regionally electrically controllable optical performance. In FIG. 3, the cross-sectional area is equal to a product of lengths of two sides.

In addition to the embodiment, in which the busbar 5 on the first planar electrode 3 is disposed on one side of the busbar 5 on the second planar electrode 4 and on a side adjacent thereto, the present disclosure further provides an embodiment in which the busbar 5 on the second planar electrode 4 and the busbar 5 on the first planar electrode 3 are disposed on the same side of the functional element. In this embodiment, the cross-sectional area of the functional element is less than 0.5 m², and the length of the busbar 5 on the first planar electrode 3 is not less than 100 mm.

It should be understood that a voltage drop of a planar electrode is limited mainly in view of a small area of a film, and a single-sided electrode can ensure the overall uniformity of the film, while a busbar length greater than 100 mm is mainly considered for the convenience of process operation.

In some embodiments of the present disclosure, referring to FIG. 4, the busbar 5 on the first planar electrode 3 is disposed on a side adjacent to one side of the busbar 5 on the second planar electrode 4 in the functional element.

Unlike the functional element with regionally electrically controllable optical performance in FIG. 2, in this embodiment, the busbar 5 on the first planar electrode 3 and the busbar 5 on the second planar electrode 4 are disposed on adjacent sides, that is, no part of the busbar 5 on the second planar electrode 4 is disposed on one side of the busbar 5 on the first planar electrode 3. It should be understood that such a design can greatly reduce the manufacturing costs and the difficulties of combined machining in the subsequent process of designing the flat conductor. In this embodiment, the cross-sectional area of the functional element is not less than 0.5 m², and the length of the busbar 5 on the first planar electrode 3 is not less than 300 mm, and not greater than half of the maximum cross-sectional perimeter of the functional element.

In some embodiments of the present disclosure, referring to FIG. 3 (top view of the functional element with regionally electrically controllable optical performance (the dashed line in the figure corresponds to the cutting surface)), the partition cutting line 11 not only cuts the second planar electrode 4 at a section formed by the cutting surface, but also further extends to an end of the second planar electrode 4 (from one end to the other end).

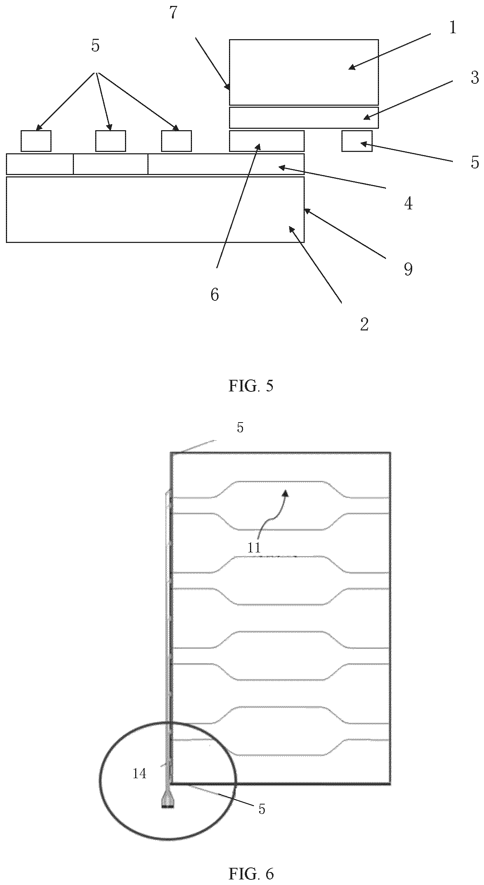

FIG. 5 is a cross-sectional view taken along a dotted solid line in FIG. 3. It should be noted that the partition cutting line 11 only needs to be arranged between the two adjacent busbars 5, and there is no requirement for distance.

In some embodiments of the present disclosure, referring to FIG. 2, the plurality of cutting surfaces include: a first cutting surface 7, a second cutting surface 8, a third cutting surface 9 and a fourth cutting surface 10, wherein
the first cutting surface 7 cuts the first transparent substrate 1, the first planar electrode 3 and the dimming functional layer 6 along a direction perpendicular to the busbar 5 on the second planar electrode 4;
the second cutting surface 8 cuts the first transparent substrate 1, the first planar electrode 3 and the dimming functional layer 6 along a direction parallel to the busbar 5 on the second planar electrode 4;
the third cutting surface 9 cuts the second transparent substrate 2, the second planar electrode 4 and the dimming functional layer 6 along a direction perpendicular to the busbar 5 on the first planar electrode 3;
the fourth cutting surface 10 cuts the second transparent substrate 2, the second planar electrode 4 and the dimming functional layer 6 along a direction parallel to the busbar 5 on the second planar electrode 4.

In the cutting method, the first cutting surface 7 and the second cutting surface 8 are matched, such that the busbar 5 on the second planar electrode 4 is exposed outside the functional element with regionally electrically controllable optical performance; the third cutting surface 9 and the fourth cutting surface 10 are matched, such that the busbar 5 on the first planar electrode 3 is exposed outside the functional element with regionally electrically controllable optical performance. In addition, the first cutting surface 7 intersects with the second cutting surface 8, and the first cutting surface 7 intersects with the second cutting surface 8.

It should be noted that when a plurality of busbars 5 are on the first planar electrode 3, the types thereof may be identical or different. Similarly, when a plurality of busbars 5 are on the second planar electrode 4, the types thereof may be identical or different. And the types of the busbars 5 on the first planar electrode 3 and the second planar electrode 4 may be identical or different.

It should be pointed out that a direction of the busbar 5 here refers to a long side direction thereof. In addition, a cutting direction refers to a direction being roughly perpendicular to the busbar 5, and not absolutely perpendicular, which is not limited thereto.

In the embodiment of the present disclosure, the partition cutting line 11 is mostly roughly perpendicular to the direction of the busbar 5. Referring to FIG. 6, the partition cutting line 11 bends at the position of the busbar 5, passes around the busbar 5 at that position, and then extends in a direction substantially perpendicular to the busbar 5.

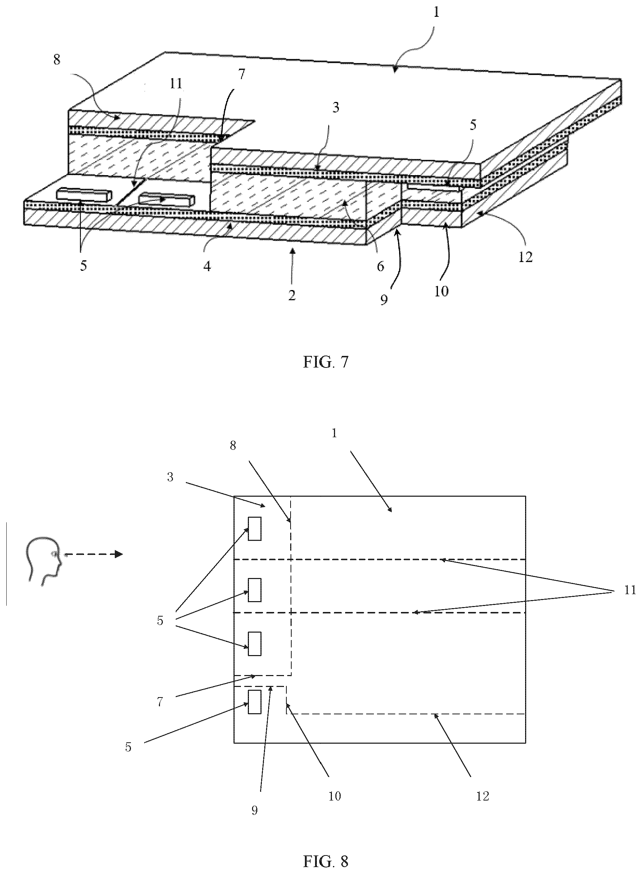

Referring to FIG. 7, in some embodiments of the present disclosure, there is provided another cutting method. The plurality of cutting surfaces further include: a fifth cutting surface 12, which cuts the second transparent substrate 2, the second planar electrode 4 and the dimming functional layer 6 along a direction perpendicular to the busbar 5 on the first planar electrode 3, and the fifth cutting surface 12 intersects with the fourth cutting surface 10.

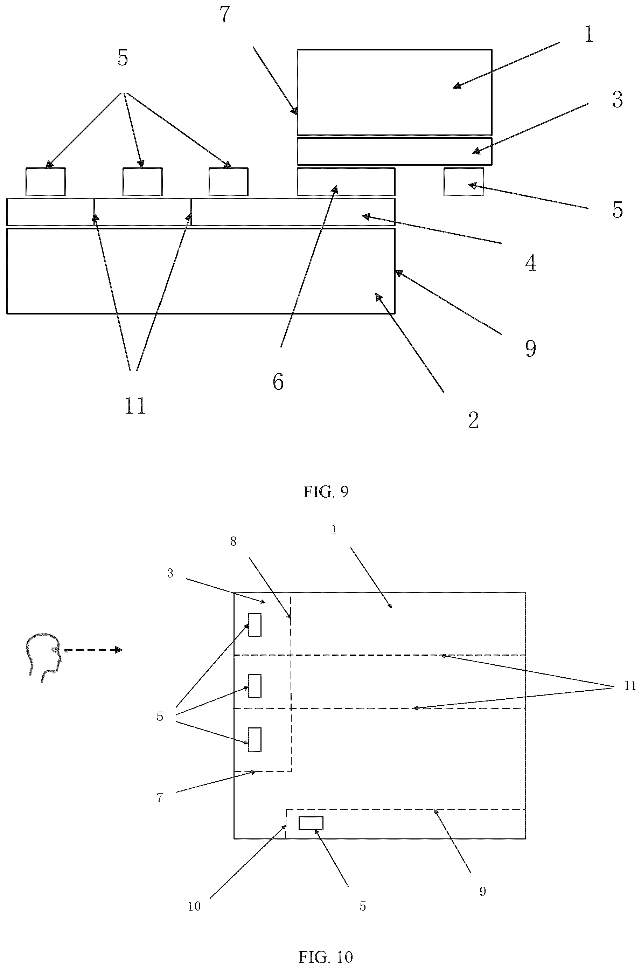

FIG. 8 is a top view schematic of the functional element with regionally electrically controllable optical performance provided in the above embodiment (the dashed line in the figure corresponds to the cutting surface), and FIG. 9 is a cross-sectional view of FIG. 8 taken along the dotted solid line.

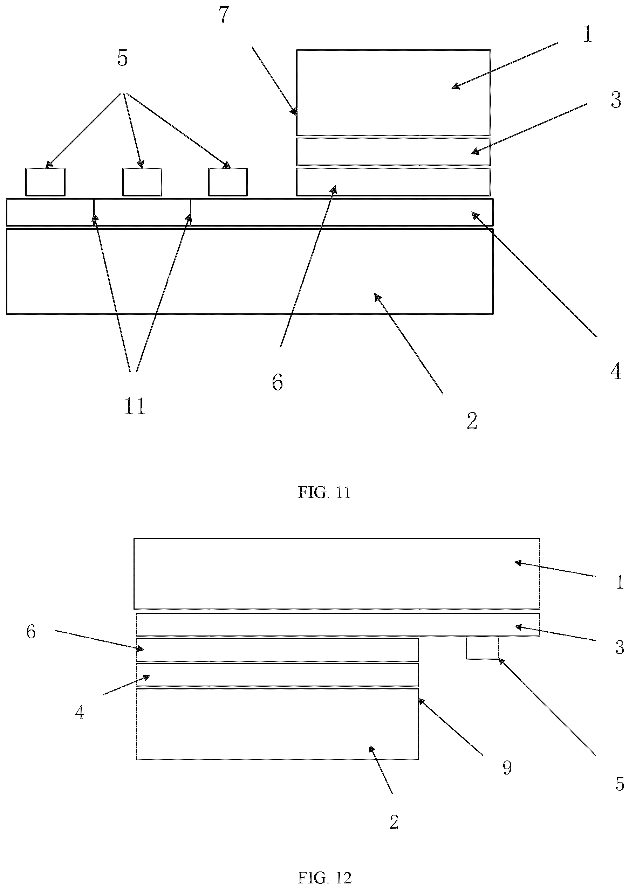

In some embodiments of the present disclosure, when the busbar 5 on the first planar electrode 3 and the busbar 5 on the second planar electrode 4 are disposed on adjacent sides, that is, no part of the busbar 5 on the second planar electrode 4 is disposed on the same side of the busbar 5 on the first planar electrode 3, referring to FIGS. 4 and 10 to 12, the third cutting surface 9 starts cutting from an opposite side of the busbar 5 of the second planar electrode 4 (on the functional element with regionally electrically controllable optical performance), and does not extend to one side of the busbar 5 of the second planar electrode 4, and stops after intersecting with the fourth cutting surface 10.

In some embodiments of the present disclosure, the length ratio of the short busbar 5 to the long busbar 5, among the busbar 5 on the second planar electrode 4 and the busbar 5 on the first planar electrode 3, is not less than 0.5. Specifically, the length difference between the busbar 5 on the second planar electrode 4 and the busbar 5 on the first planar electrode 3 should not be greater than 50%. Excessive differences between the busbars can also result in ineffective optical performance. Optionally, the difference is less than 30%, and more preferably, the difference is less than 10%.

In some embodiments of the present disclosure, a distance between the busbar 5 on the first planar electrode 3 and the busbar 5 on the second planar electrode 4 on the same side of the functional element with regionally electrically controllable optical performance is not less than 5 mm.

Since the busbar 5 on the first planar electrode 3 and the busbar 5 on the second planar electrode 4 are on different planar electrode surfaces, the busbars 5 need to be machined separately from different transparent substrates during machining, in order to form respective substrate cutting surfaces. If the spacing is too close, cutting of the transparent substrates may result in: insufficient inter-electrode distance leading to short-circuiting, or high voltage breakdown, or interference with each other during machining, and damage on the respective busbars.

Referring to FIGS. 6, 13 and 14, in some embodiments of the present disclosure, the functional element with regionally electrically controllable optical performance further includes:
a conductor 14 having lead-out bodies 13 respectively corresponding to the busbar 5 on the first planar electrode 3 and the busbar 5 on the second planar electrode 4.

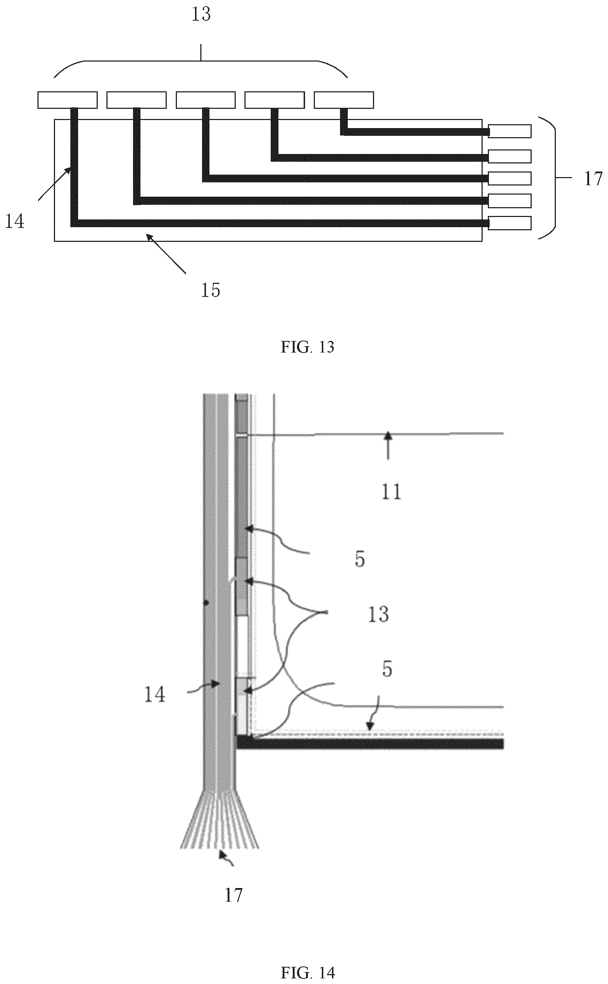

Exemplarily, the conductor 14 may be a flat conductor. Further, the busbar 5 on the first planar electrode 3 and the busbar 5 on the second planar electrode 4 can be led out by a same flat conductor, and the flat conductor is designed as a flexible printed circuit board, wherein each lead-out body 13 of the flat conductor corresponds to both: the busbar 5 on the first planar electrode 3, and the busbar 5 on the second planar electrode 4. In the figure, the reference sign 15 is a protective layer, and the reference sign 16 is an external weldment (exemplarily, the conductor 14 in FIG. 13 can be made of conductive copper foil).

In some embodiments of the present disclosure, the number of lead-out bodies 13 is not less than a sum of the number of busbar 5 on the first planar electrode 3 and the number of busbar 5 on the second planar electrode 4. That is, the number of lead-out bodies 13 of the flat conductor is greater than or equal to the sum of the number of conductors of the busbar 5 on the first planar electrode 3 and the busbar 5 on the second planar electrode 4.

In some embodiments of the present disclosure, the dimming functional layer 6 includes: any one or more combinations of a PDLC dimming film, an EC dimming film, an SPD dimming film and a LV dimming film (the dimming functional layer 6 can adopt dimming technologies such as (Polymer Dispersed Liquid Crystal) PDLC, (Electrochromic)EC, (Suspended Particle Device) SPD, (Light Valve) LV).

In some embodiments of the present disclosure, when a plurality of first transparent substrates 1 and a plurality of second transparent substrates 2 are provided, the plurality of first transparent substrates 1 and the plurality of second transparent substrates 2 are arranged in a vertical direction. That is, in the vertical direction, according to an order of FIG. 1 (from bottom to top), there exist N second transparent substrates 2 (vertically covered in sequence), a second planar electrode 4, a dimming functional layer 6, a first planar electrode 3, N first transparent substrates 1 (vertically covered in sequence). It should be pointed out that the N second transparent substrates 2 here can be replaced with the N different transparent substrates and the N first transparent substrates 1 can also be replaced with the N different transparent substrates, however, the first transparent substrates 1 and the second transparent substrates 2 on both sides of the dimming functional layer 6 are required to be consistent.

In an embodiment, the present disclosure also provides a laminated glass, including any functional element with regionally electrically controllable optical performance in the above embodiment, configured to be mounted on at least one of a sunroof, a side window, a windscreen and a rear windshield of a vehicle, and as an interior glass or an exterior glass in a building for sun shading or privacy protection.

The laminated glass mounted on the vehicle described in the above embodiment may regionally control the optical properties of vehicle glass in different regions without affecting the line of sight between the passengers and the outside of the vehicle, i.e., without affecting the function thereof as a vehicle window *per se,* and can also control the optical properties of different positions in a piece of vehicle glass in a same region.

It should be understood that the laminated glass can also be used for glass in subway window, train window, bus window, ship interior window, window on both sides of aircraft interiors, and interior or exterior glass in a building for sun shading or privacy protection.

As can be seen from the above description, the embodiments of the present disclosure provide a functional element with regionally electrically controllable optical performance and a laminated glass. The functional element with regionally electrically controllable optical performance includes: at least one first transparent substrate and at least one second transparent substrate; a first planar electrode and a second planar electrode, both disposed between the first transparent substrate and the second transparent substrate and each provided with at least one busbar; and a dimming functional layer disposed between the first planar electrode and the second planar electrode, in which the functional element is provided with a plurality of cutting surfaces, so as to expose the busbar on the first planar electrode and the busbar on the second planar electrode; and the second planar electrode has a partition cutting line, which cuts the second planar electrode into independent sections along a direction perpendicular to the busbar on the second planar electrode, and the number of the independent sections corresponds to the number of the busbar on the second planar electrode.

As compared with the functional element with regionally electrically controllable optical performance in the prior art, on one hand, the functional element with regionally electrically controllable optical performance provided in the embodiments of the present disclosure achieves individual regional control by setting cutting lines and busbars, on the other hand, the functional element with regionally electrically controllable optical performance provided in the embodiments of the present disclosure greatly simplifies the manufacturing complexity of partitioned electrically controllable optical functional elements, reduces the voltage drop among different partitioned functional regions, and ensures the consistency of optical properties of independent functional regions.

It should be understood that in the description of the present specification, the terms "center", "longitudinal", "lateral", "up", "down", "front", "back", "left", "right", "vertical", "horizontal", "top", "bottom", "inside", "outside" and the like indicate the orientation or positional relationship based on the orientation or positional relationship shown in the figures, and are only intended to facilitate the description of the present disclosure and to simplify the description, and are not intended to indicate or suggest that the indicated device or element must have a particular orientation, be constructed and operated in a particular orientation, and therefore cannot be understood as a limitation on the present disclosure. In addition, the terms "first", "second" are only used for descriptive purposes, and cannot be construed to indicate or suggest relative importance or implicitly indicate a number of technical features indicated. Therefore, the features defined by "first", "second" may explicitly or implicitly include one or more of the features. In the description of the present disclosure, "a plurality of" refers to two or more, unless otherwise specified.

Description of reference terms, such as "one embodiment", "one specific embodiment", "some embodiments", "for example", "example", "specific example", or "some examples" is intended to mean that specific features, structures, materials or characteristics described in conjunction with the embodiments or examples are included in at least one embodiment or example of the present disclosure. In this specification, the schematic representations of the above terms do not necessarily refer to the same embodiment or example. Moreover, the specific features, structures, materials or characteristics described may be combined in a suitable manner in any one or more embodiments or examples. An order of steps involved in the embodiments is used to schematically illustrate the implementation of the present disclosure, and the order of steps therein is not limited and may be appropriately adjusted as needed.

It should be noted that in the description of the present disclosure, unless otherwise expressly specified and limited, the terms "mounted", "interconnected" and "connected" should be broadly understood, such as, a fixed connection, a detachable connection, or an integral connection; additionally, a mechanical connection or an electrical connection; a direct connection, or an indirect connection through an intermediate medium, or a connection within two components. For a person skilled in the art, the specific meanings of the above terms in the present disclose should be understood based on specific circumstances.

The specific embodiments described above further demonstrate the objective, technical solutions and advantageous effects of the present disclosure in detail. It should be understood that those described above are only the specific embodiments of the present disclosure, and are not intended to limit the protection scope of the present disclosure. Any amendment, equivalent substitution, improvement made within the spirit and principle of the present disclosure shall fall within the protection scope of the present disclosure.

## Claims

1. A functional element with regionally electrically controllable optical performance, comprising:
at least one first transparent substrate and at least one second transparent substrate;
a first planar electrode and a second planar electrode, both disposed between the first transparent substrate and the second transparent substrate, and each provided with at least one busbar; and
a dimming functional layer disposed between the first planar electrode and the second planar electrode;
wherein the functional element is provided with a plurality of cutting surfaces, so as to expose the busbar on the first planar electrode and the busbar on the second planar electrode; and
the second planar electrode has a partition cutting line, which cuts the second planar electrode into independent sections along a direction perpendicular to the busbar on the second planar electrode, and the number of the independent sections corresponds to the number of the busbar on the second planar electrode.

2. The functional element according to claim 1, wherein at least a portion of the busbar on the second planar electrode, and the busbar on the first planar electrode are disposed on the same side of the functional element.

3. The functional element according to claim 2, wherein the busbar on the first planar electrode is polyline-shaped, and is disposed on both: one side of the busbar on the second planar electrode, and a side adjacent thereto.

4. The functional element according to claim 3, wherein a cross-sectional area of the functional element is not less than 0.5 m², and a length of the busbar on the first planar electrode is not less than 300 mm and not greater than half of a cross-sectional perimeter of the functional element.

5. The functional element according to claim 2, wherein the busbar on the second planar electrode and the busbar on the first planar electrode are disposed on a same side of the functional element.

6. The functional element according to claim 5, wherein the cross-sectional area of the functional element is less than 0.5 m², and the length of the busbar on the first planar electrode is not less than 100 mm.

7. The functional element according to claim 1, wherein the busbar on the first planar electrode is disposed on a side adjacent to one side of the busbar on the second planar electrode in the functional element.

8. The functional element according to claim 7, wherein the cross-sectional area of the functional element is not less than 0.5 m², and the length of the busbar on the first planar electrode is not less than 300 mm and not greater than half of a maximum cross-sectional perimeter of the functional element.

9. The functional element according to claim 1, wherein the plurality of cutting surfaces comprise: a first cutting surface, a second cutting surface, a third cutting surface and a fourth cutting surface, wherein
the first cutting surface cuts the first transparent substrate, the first planar electrode and the dimming functional layer along a direction perpendicular to the busbar on the second planar electrode;
the second cutting surface cuts the first transparent substrate, the first planar electrode and the dimming functional layer along a direction parallel to the busbar on the second planar electrode;
the third cutting surface cuts the second transparent substrate, the second planar electrode and the dimming functional layer along a direction perpendicular to the busbar on the first planar electrode; and
the fourth cutting surface cuts the second transparent substrate, the second planar electrode and the dimming functional layer along a direction parallel to the busbar on the second planar electrode.

10. The functional element according to claim 9, wherein the plurality of cutting surfaces further comprise: a fifth cutting surface, which cuts the second transparent substrate, the second planar electrode and the dimming functional layer along a direction perpendicular to the busbar on the first planar electrode, and the fifth cutting surface intersects with the fourth cutting surface.

11. The functional element according to claim 1, wherein a length ratio of a short busbar to a long busbar is not less than 0.5, among the busbar on the second planar electrode and the busbar on the first planar electrode.

12. The functional element according to claim 1, wherein a minimum spacing between the busbar on the first planar electrode and the busbar on the second planar electrode on a horizontal projection plane is not less than 5 mm.

13. The functional element according to claim 1, further comprising:
a conductor having lead-out bodies respectively corresponding to the busbar on the first planar electrode and the busbar on the second planar electrode.

14. The functional element according to claim 13, wherein the number of lead-out bodies is not less than a sum of the number of busbar on the first planar electrode and the number of busbar on the second planar electrode.

15. The functional element according to claim 1, wherein the dimming functional layer comprises: any one or more combinations of a Polymer Dispersed Liquid Crystal (PDLC) dimming film, an Electrochromic (EC) dimming film, a Suspended Particle Device (SPD) dimming film and a Light Valve (LV) dimming film.

16. A laminated glass, comprising the functional element with regionally electrically controllable optical performance according to any of claims 1 to 14, configured to be mounted on at least one of a sunroof, a side window, a windscreen and a rear window of a vehicle, and as an interior glass or an exterior glass in a building for sun shading or privacy protection.
